# EUROPÄISCHE PATENTSCHRIFT

(11) **EP 2 226 274 B1**
(45) Veröffentlichungstag und Bekanntmachung des Hinweises auf die Patenterteilung: **10.02.2016**
(21) Anmeldenummer: 10155172.9
(22) Anmeldetag: 02.03.2010
(51) Int. Cl.: B65G 29/00, B65G 47/84, B65C 9/00, B67C 3/22, B29C 49/42, B67C 7/00

(54) **Vorrichtung zum Behandeln von Behältnissen mit direkt angetriebenem Transportrad**
Device for handling containers with directly actuated transport wheel
Dispositif de traitement de récipients avec une roue de transport entraînée directement

(30) Priorität: 04.03.2009 DE 102009011692
(43) Veröffentlichungstag der Anmeldung: 08.09.2010
(73) Patentinhaber: Krones AG, 93073 Neutraubling (DE)
(72) Erfinder: Stoiber, Christian, 93185 Michelsneukirchen (DE)
(74) Vertreter: Bittner, Bernhard

(56) Entgegenhaltungen:
- EP-A1- 1 970 329
- EP-A2- 1 826 156
- DE-A1- 19 928 325
- US-A- 3 913 635
- US-A- 4 132 455
- US-A- 6 019 463
- US-B2- 6 470 807

## Beschreibung

Die vorliegende Erfindung bezieht sich auf eine Vorrichtung zum Behandeln von Behältnissen. Derartige Vorrichtungen sind im Bereich der Getränke herstellenden Industrie seit langem bekannt. Die vorliegende Erfindung wird unter Bezugnahme auf eine Blasmaschine zur Blasumformung von Kunststoffvorformlingen in Kunststoffbehältnisse beschrieben, es wird jedoch darauf hingewiesen, dass die Erfindung auch bei anderen Vorrichtungen Anwendung finden kann wie beispielsweise Befüllungseinheiten für Behältnisse, Sterilisationseinheiten für Behältnisse und dergleichen.

Derartige Maschinen zur Blasumformung von Behältnissen weisen in einer Ausführungsform ein Blasrad auf, an dem eine Vielzahl von Blasstationen angeordnet ist, welche die Kunststoffvorformlinge zu Kunststoffbehältnissen expandieren. Diese Maschinen werden teilweise auch als Rundläutermaschinen bezeichnet. Dabei ist es im Stand der Technik üblich, dass die Antriebe für derartige Maschinen über ein Getriebe an das jeweilige Blasrad angekoppelt sind, um dieses anzutreiben.

Aus dem Stand der Technik ist eine Transportvorrichtung für eine Blasmaschine bekannt, bei der ein Antriebsmotor direkt an einer Antriebswelle eines Transportrades sitzt und auf diese Weise die Welle antreibt. Eine derartige Vorgehensweise erfordert jedoch einen sehr hohen Kraftaufwand des Motors und benötigt daher sehr aufwendige und kostenintensive Motoren.

Die US 6,923 636 B2 beschreibt eine Blasformmaschine. Dabei ist eine Antriebsvorrichtung vorgesehen, welche einen Schließ- und Verriegelungsmechanismus steuert, wobei ein Direktantrieb direkt mit einem Klemmelement und ein weiterer Direktantrieb direkt mit einem anderen Klemmelement verbunden ist.

In der DE 199 28 325 A1 wird eine Abfülleinrichtung für Flaschen offenbart. Diese Abfülleinrichtung umfasst eine Streckblasmaschine mit einer vorgeschalteten Vorformling-Zuführung, einer Spülmaschine und eine Füllmaschine. Alle diese Maschinen sind als Rundläufer ausgebildet und werden jeweils von Elektromotoren angetrieben.

Wie oben erwähnt, weisen die hier gegenständlichen Rundläufermeschinen, wie beispielsweise Etikettier-, Streckblas-, Inspektions-, Verschließmaschinen für Gefäße wie Flaschen, Dosen, Becher oder dergleichen oder auch Füller für derartige Gefäße und Reinigungsmaschinen wie Rinser, eine Mehrzahl von gleichartigen Einrichtungen bzw. Stationen auf, die auf einem Karussell angeordnet sind. Dabei ist dieses Karussell in der Regel drehend gelagert. Zum motorischen Antreiben des Karussells wird üblicher Weise ein Getriebemotor eingesetzt, an dessen Abtriebswelle ein Ritzel angebracht ist, weiches über Zwischenstufen in die Verzahnung der Lagerung des Karussells eingreift.

Aufgrund der bauräumlichen Gegebenheiten sind dabei üblicherweise Zahnradzwischenstufen vorgesehen, um den Getriebemotor an einer kollisionsfreien Stelle positionieren zu können. Daneben ist es auch bekannt, einen Getriebemotor in Kombination mit einer Zahn- oder Keilriemenzwischenübersetzung vorzusehen.

Aufgrund dieser Anordnungen ergeben sich oftmals hohe Lärmemissionen aufgrund der hohen Motordrehzahlen und/oder der zwischengeschalteten Zahnrad- oder Riemenstufen. Daneben ergeben sich auch hohe Kosten aufgrund der bauräumlichen Notwendigkeit von Zahnrad-/Riemenzwischenstufen. Daneben tritt ein Wirkungsgradverlust aufgrund von Getriebereibung auf und weiterhin sind die verwendeten Getriebe wartungsintensiv hinsichtlich Ölwechsel und Entsorgungsproblematiken. Daneben sind derartige Getriebe auch störanfällig.

Weiterhin haben derartige Getriebemotoren oft ein eingeschränktes dynamisches Regelverhalten, was vor allem bei geblockten Maschinen problematisch ist, insbesondere wenn diese abgebremst werden müssen. Beim Abbremsen müssen die geblockten Maschinen wie zum Beispiel eine Streckblasmaschine und ein Füller synchron heruntergefahren werden. Häufig werden aufgrund der hohen Massenträgheitsmomente zusätzliche mechanische Bremsen eingesetzt, die ein synchrones Abbremsen erschweren bzw. nicht ermöglichen.

Der vorliegenden Erfindung liegt die Aufgabe zu Grunde, die aus dem Stand der Technik bekannten Nachteile zu überwinden und beispielsweise die Lärmemissionen derartiger Maschinen zu verringern. Daneben liegt der Erfindung die Aufgabe zu Grunde, das dynamische Regelverhalten derartiger Antriebe zu verbessern.

Diese Aufgaben werden erfindungsgemäß durch eine Vorrichtung nach Anspruch 1 sowie eine Anlage nach Anspruch 12 erreicht. Vorteilhafte Ausführungsformen und Weiterbildungen sind Gegenstand der Unteransprüche.

Eine erfindungsgemäße Vorrichtung zum Behandeln von Behältnissen weist eine Vielzahl von Behandlungseinheiten auf, welche die Behältnisse in einer vorgegebenen und vorzugsweise gleichartigen Weise behandeln. Dabei sind diese Behandlungseinheiten (insbesondere fest) auf einem drehbar angeordneten Träger angeordnet, wobei eine Antriebseinrichtung vorgesehen ist, welche ein drehfest mit dem Träger ausgebildetes Antriebsrad zum Drehen des Trägers antreibt, wobei diese Antriebseinrichtung einen Antriebsmotor aufweist. Bevorzugt werden die Behandlungseinheiten durch den Träger auf einer kreisförmigen Bahn bewegt.

Erfindungsgemäß weist die Antriebseinrichtung ein mit dem Antriebsmotor ein an einer Abtriebswelle des Antriebsmotors angeordnetes Abtriebsrad auf und dieses Abtriebsrad wirkt direkt mit dem Antriebsrad zum Drehen des Trägers zusammen.

Die drehfeste Verbindung zwischen dem Träger und dem Antriebsrad kann dabei so gestaltet sein, dass der Träger über eine Antriebswelle drehbar ist und an dieser Antriebswelle wiederum das Antriebsrad angeordnet ist. Erfindungsgemäß ist jedoch dieses Antriebsrad direkt mit dem Träger ausgebildet, so dass beispielsweise der Träger selbst eine Außenverzahnung aufweist, in welche das Abtriebsrad eingreift. Unter einem direkten Zusammenwirken wird verstanden, dass keinerlei weitere Antriebsräder zwischen dem Abtriebsrad und dem Antriebsrad angeordnet sind und auch kein Riemen oder andere Kraftübertragungsmittel vorgesehen sind.

Es ist auf dem Träger eine Vielzahl von Behandlungseinheiten für die Behältnisse angeordnet. Erfindungsgemäß weist jede dieser Behandlungseinheiten eine Zuführeinrichtung auf, welche den Behältnissen ein fließfähiges Medium zuführt. Dabei kann es sich sowohl um gasförmige Medien wie beispielsweise Druckluft handeln, welche zum Expandieren der Behältnisse dienen als auch um flüssige Medien wie beispielsweise das Produkt, mit dem die Behältnisse befüllt werden.

Weiterhin weist vorteilhaft auch jede Behandlungseinheit wenigstens ein bewegliches Element auf, welches in einer zumindest auch zu einer Bewegungsrichtung der Behältnisse senkrecht stehenden Richtung bewegbar ist. Bei diesem beweglichen Element kann es sich beispielsweise um eine Blasdüse handeln, ein Element, welches Verschlüsse auf die Behältnisse zu führt, um eine Reckstange oder auch um eine Einfülleinrichtung für ein Getränk.

Weiterhin weist bevorzugt auch jede Behandlungseinheit ein Greifelement auf, welches die Behältnisse in einem bestimmten Bereich der Behältnisse, namentlich einem Halsbereich der Behältnisse, greift. Bei diesen Greifelementen kann es sich beispielsweise um Greifklammern handeln, welche die Behältnisse an oder unterhalb eines Tragrings der Behältnisse greifen.

Es wird damit für die erfindungsgemäße Vorrichtung die Verwendung eines Direktantriebs zum Antreiben des Trägers dieser Rundläufermaschinen vorgeschlagen. Der vorgeschlagene Direktantrieb zeichnet sich gegenüber herkömmlichen Antrieben dadurch aus, dass er ohne Getriebe und verschleißbehaftete Komponenten auskommt. Auf diese Weise lassen sich Reibungsverluste im System verhindern und im Ergebnis die Energiebilanz positiv steigern. Der Gesamtwirkungsgrad steigt und die zugeführte Leistung wird effizienter genutzt. Daneben können auch weitere Folgekosten durch den Einsatz von Direktantrieben vermieden werden. Ein weiterer Vorteil besteht darin, dass derartige Direktantriebe nahezu geräuschlos laufen und damit auch Maßnahmen zur Lärmminderung eingeschränkt werden können. Die kompakte Bauform benötigt verhältnismäßig wenig Platz und auch kostenintensive Wartungsintervalle fallen weg. Insbesondere kommt der vorgeschlagene Direktantrieb also ohne zwischengeschaltete Ritzel aus.

Bei einer vorteilhaften Ausführungsform weist die Vorrichtung ein ortsfestes Gestell auf, dem gegenüber der Träger drehbar gelagert ist. Dabei ist besonders bevorzugt der Träger gegenüber dem Gestell über ein Vierpunktmomentenlager drehbar gelagert. Der Direktantrieb bzw. das Abtriebsrad der Abtriebswelle greift bevorzugt direkt in den so gelagerten Träger ein, wobei auf diese Weise die Dynamik der gesamten Anlage verbessert werden kann. Dabei kann die Antriebseinrichtung bzw. das Abtriebsrad sowohl zum Beschleunigen als auch zum Abbremsen des Karussells eingesetzt werden. Dabei ist es beispielsweise auch möglich, dass eine Steuerung des Antriebs derart gestaltet ist, dass beim Abbremsen entstehende Energie zwischengespeichert wird. Der Träger ist bevorzugt wellenlos gelagert, d. h. zur Lagerung des Trägers wird gerade keine Zentralwelle eingesetzt.

Vorzugsweise ist das Abtriebsrad an einer Abtriebswelle des Antriebsmotors angeordnet und diese Abtriebswelle erstreckt sich senkrecht zu einer Ebene des Trägers bzw. der Drehebene der Anlage. Auf diese Weise ist es möglich, eine Geradverzahnung zum Antrieb des Trägers einzusetzen, es wäre jedoch auch möglich, Kegelverzahnungen oder dergleichen zu verwenden.

Vorzugsweise handelt es sich bei der Vorrichtung um eine Vorrichtung zum Umformen von Kunststoffvorformlingen zu Kunststoffbehältnissen. Entsprechend ist bei dieser Anordnung der Träger ein Blasrad, auf dem eine Vielzahl von Blasstationen angeordnet ist.

Vorzugsweise weist die Vorrichtung wenigstens eine ortsfest angeordnete Führungskurve auf, welche eine Bewegung wenigstens einer Behandlungseinheit oder von Elementen dieser Behandlungseinheit bewirkt. Bei dieser Ausführungsform handelt es sich damit um eine Rundläufermaschine. Es wäre jedoch auch möglich, den erfindungsgemäßen Antrieb auf andere Maschinen und insbesondere getaktete Maschinen anzuwenden. Vorzugsweise ist der Antriebsmotor vollständig unterhalb des Trägers angeordnet. Auf diese Weise wird erreicht, dass die Bedienung der gesamten Anlage nicht durch den Antriebsmotor behindert wird. Mit anderen Worten erstreckt sich der Antriebsmotor bezüglich einer Ebene des Trägers oder Blasrads nach unten.

Bevorzugt weist das oben erwähnte Gestell eine Ausnehmung zur Aufnahme des Antriebsmotors auf. Auf diese Weise ist es möglich, den Antriebsmotor platzsparend und wenig störend unterzubringen.

Vorzugsweise ist der Antriebsmotor ein Elektromotor, der sowohl zum Beschleunigen als auch zum Verzögern des Trägers dient. Dabei kann insbesondere ein so genannter Torquemotor vorgesehen sein. Ein derartiger Torquemotor oder Langsamläufer weist eine hohe Polzahl auf und zumeist einen ringförmigen genuteten Rotor mit einem großen Durchmesser. Typische Drehzahlbereiche derartiger Torquemotoren liegen zwischen einer Umdrehung pro Minute und ca. 1200 Umdrehung pro Minute. Damit lassen derartige Torquematoren insbesondere hohe Drehmomente bis 4000 Nm und damit einen Direktanschluss, wie hier an den Träger, zu.

Bei einer weiteren vorteilhaften Ausführungsform weist die Vorrichtung zusätzliche Bremseinrichtungen zum Abbremsen des Trägers auf. Dabei ist es möglich, dass der Antriebsmotor bei der Verwendung dieser zusätzlichen mechanischen Bremsen als unterstützende elektrische Bremse eingesetzt wird Bei einer weiteren vorteilhaften Ausführungsform sind mehrere Antriebseinrichtungen bzw. Antriebsmotoren vorgesehen. Auf diese Welse ist es möglich, je nach Maschinengröße mit einer bestimmten Motorenbaugröße verschiedene Maschinengrößen abzudecken und auf diese Weise die Modularität einer entsprechenden Anordnung zu erhöhen.

Die hier beschriebene hohe Dynamik des Direktantriebs ermöglicht eine schnelle Regelung der Maschine insbesondere für verschiedene Betriebszustände. Genau genommen ist ein schnelleres Hochfahren und Abbremsen als nach dem Stand der Technik möglich. Diese höhere Dynamik und die damit verbundene bessere elektrische Regelbarkeit bringt vor allem Vorteile bei so genannten geblockten Maschinen, die synchron angefahren und abgebremst werden müssen. Auch wenn zusätzlich mechanische Bremseinrichtungen erforderlich sind, kann der Direktantrieb zur Gesamtregelung des Bremsvorgangs eingesetzt werden. Weitere Vorteile sind, wie oben erwähnt, eine geringere Geräuschemission, die Wertungsfreiheit, die verringerte Störanfälligkeit und der hohe Wirkungsgrad. Auch ergeben sich aufgrund nicht erforderlicher Zwischenübersetzungen weitere Kostenvorteile.

Bei einer weiteren vorteilhaften Ausführungsform sind das Antriebsrad und das Abtriebsrad jeweils Zahnräder, d. h. eine Verzahnung des Abtriebsrads greift unmittelbar in eine entsprechende Verzahnung des Antriebsrads ein. Bevorzugt weist dabei das Antriebsrad eine Außenverzahnung auf, in welche das Abtriebsrad eingreift. Es wäre jedoch auch möglich, an dem Träger eine Innenverzahnung vorzusehen, in welche das Abtriebsrad eingreift.

Die vorliegende Erfindung ist weiterhin auf eine Anlage zum Behandeln von Behältnissen mit einer Vorrichtung der oben beschriebenen Art gerichtet und mit einer weiteren Vorrichtung zum Behandeln von Behältnissen, wobei diese weitere Vorrichtung zum Behandeln von Behältnissen mit der Vorrichtung, insbesondere dauerhaft, synchronisiert bzw. geblockt ist. Vorzugsweise weist die Anlage eine um eine vorgegebene (geometrische) Drehachse angeordnete Transporteinrichtung auf, welche von der Vorrichtung Behältnisse abführt, wobei diese Transporteinrichtung ein Antriebselement zum Antreiben der besagten Transporteinrichtung aufweist. Damit ist zusätzlich zu der erfindungsgemäßen Vorrichtung eine weitere Transporteinrichtung, wie beispielsweise ein Transportstern, vorgesehen, welche mit der erfindungsgemäßen Vorrichtung gekoppelt ist. Auch diese Transporteinrichtung kann dabei mit einem Direktantrieb versehen sein.

Bevorzugt weist die Anlage eine zweite um eine vorgegebene Drehachse angeordnete Transporteinrichtung auf, welche die Behältnisse, insbesondere Kunststoffvorformlinge, der Vorrichtung zuführt, wobei die zweite Transporteinrichtung ebenfalls ein Antriebselement zum Antreiben der zweiten Transporteinrichtung aufweist.

So kann es sich beispielsweise um eine Anlage handeln, welche die oben genannte Vorrichtung in Form einer Maschine zur Blasumformung der Behältnisse enthält, sowie eine weitere Vorrichtung, wie beispielsweise eine Befüllungseinrichtung, um die umgeformten Behältnisse mit einer Flüssigkeit und insbesondere mit einem Getränk zu befüllen. Dabei kann eine Steuerungseinrichtung vorgesehen sein, welche eine geblockte bzw. synchronisierte Ansteuerung der Umformungseinheit und der Fülleinrichtung ermöglicht.

Weitere Vorteile und Ausführungsformen ergeben sich aus den beigefügten Zeichnungen:

Darin zeigen:
- Fig. 1: eine Draufsicht auf eine erfindungsgemäße Vorrichtung;
- Fig. 2: eine perspektivische Ansicht der Vorrichtung aus Fig. 1;
- Fig. 3: eine Detaildarstellung der Vorrichtung aus Fig. 1;
- Fig. 4: eine Seitenansicht der Vorrichtung aus Fig. 1; und
- Fig. 5: eine schematische Darstellung einer erfindungsgemäßen Anlage.

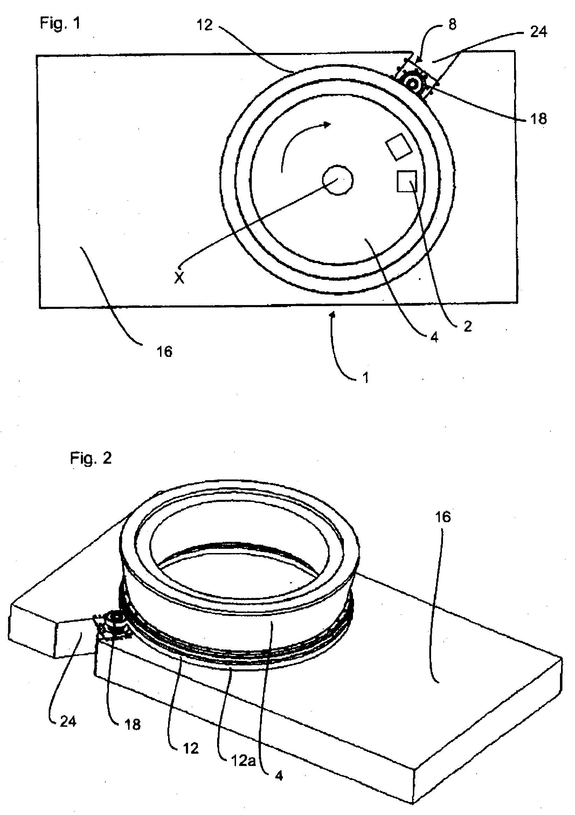

Fig. 1 zeigt eine Draufsicht auf eine erfindungsgemäße Vorrichtung 1 zum Behandeln von Behältnissen (nicht gezeigt), genauer gesagt, eine schematische Ansicht einer Blasmaschine zum Umformen von Kunststoffvorformlingen in Kunststoffbehältnisse. Diese Vorrichtung 1 weist dabei einen Träger 4 auf, der um eine Drehachse X drehbar angeordnet ist. Dabei ist dieser Träger 4 gegenüber einem Gestell 16 gelagert. An einem Außenumfang des Trägers weist dieser ein Antriebsrad 12 auf, welches von einer in ihrer Gesamtheit mit 8 bezeichneten Antriebseinrichtung angetrieben wird.

Dabei weist diese Antriebseinrichtung ein Abtriebsrad 18 auf, welches den Träger 4 zur Drehung antreibt. Das Bezugszeichen 2 bezieht sich auf eine nur schematisch gezeigte Behandlungseinheit für die Behältnisse. Insgesamt ist eine Vielzahl derartiger Behandlungseinheiten 2 auf dem Träger 4 angeordnet. Das Antriebsrad 12 wird über das Abtriebsrad 18, welches an einem Antriebsmotor angeordnet ist, angetrieben. Dieser Antriebsmotor bzw. die Antriebseinrichtung ist einer Ausnehmung 24 des Gestells vorgesehen. Diese Ausnehmung 24 erstreckt sich hier in einer im Wesentlichen radialen Richtung des Trägers 4, genauer gesagt erstreckt sich ein Zentralbereich dieser Ausnehmung 24 in dieser radialen Richtung. Das Antriebsrad ist drehfest mit dem Träger 4 gekoppelt. Dabei erstreckt sich die Ausnehmung bis hin zu dem Träger 4

Fig. 2 zeigt eine perspektivische Darstellung der in Fig. 1 gezeigten Vorrichtung. Man erkennt hier wiederum das Abtriebsrad 18, welches das Antriebsrad 12 des Trägers 4 antreibt. Dieses Antriebsrad weist eine Außenverzahnung 12a auf, in welche wiederum eine Verzahnung des Abtriebsrads 18 eingreift.

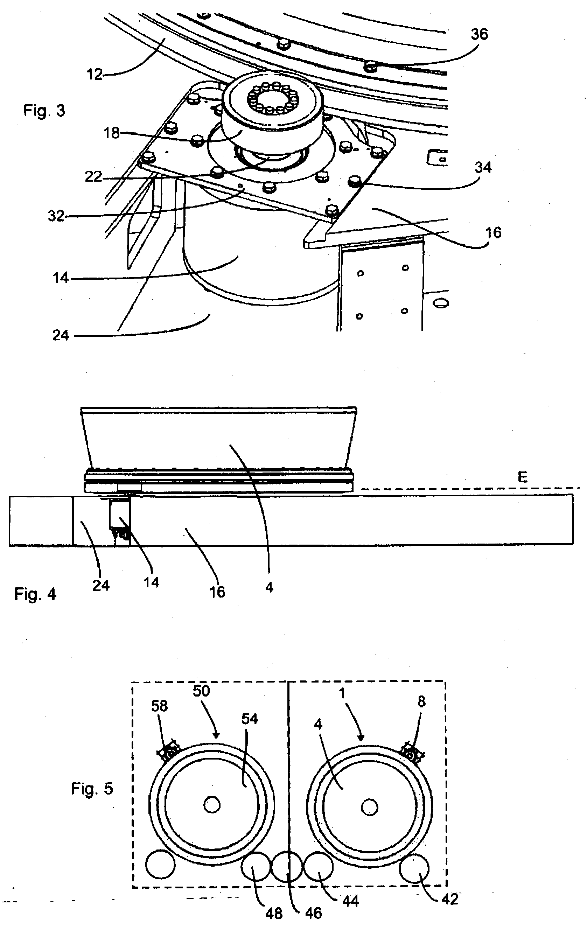

Fig. 3 zeigt eine Detaildarstellung der in Fig. 1 gezeigten Vorrichtung. Man erkennt hier, dass in der Ausnehmung 24 Insbesondere auch ein Antriebsmotor 14 der Antriebseinrichtung 8 angeordnet ist. Dieser Antriebsmotor 14 weist eine Abtriebswelle 22 auf, an der wiederum das Abtriebsrad 18 angeordnet ist. Das Antriebsrad 12 ist mit einer Vielzahl von Schraubverbindungen 36 an dem Träger 4 angeordnet. Das Bezugszeichen 32 bezieht sich auf eine Halteplatte, die wiederum an dem Träger 16 angeschraubt ist. Diese Halteplatte dient zum Haltern des Antriebsmotors 14. Zu Montagezwecken ist es möglich, die Verschraubungen 34 zu lösen, um die Halteplatte 32 von dem Gestell 16 zu entfernen.

Fig. 4 zeigt eine Seitenansicht der in Fig. 1 gezeigten Vorrichtung. Man erkennt hier, dass der Antriebsmotor 14 vollständig in der Ausnehmung 24 angeordnet ist und dass er sich gegenüber einer Ebene E des Trägers 4 nach unten erstreckt. Durch die in Fig. 4 gezeigte Anordnung des Motors 14 kann erreicht werden, dass der Zugang zu dem Träger 4 in der Umgebung des Trägers 4 nicht behindert wird. Der Träger 4 mit den daran angeordneten Behandlungseinheiten dient damit auch als Transporteinrichtung, um die einzelnen Behältnisse (nicht gezeigt) zu transportieren.

Während dieses Transports werden die Behältnisse in der dargestellten Weise behandelt, also beispielsweise die Vorformlinge zu Behältnissen umgeformt oder auch die fertigen Behältnisse befüllt oder beispielsweise auch verschlossen.

Fig. 5 zeigt eine schematische Darstellung einer erfindungsgemäßen Anlage. Neben der Vorrichtung 1 zum Behandeln von Behältnissen ist hier eine erste Transporteinrichtung 42 bzw. ein Einlaufstern vorhanden, der die Behältnisse an die Vorrichtung 1 übergibt. Weiterhin ist eine Transporteinrichtung 44 in Form eines Auslaufsterns vorhanden, der hier die umgeformten Behältnisse von der Vorrichtung 1 abführt. Über ein Übergaberad 46 werden die Behältnisse an einen weiteren Einlaufstern 48 übergeben und von diesem Einlaufstern 48 an eine Fülleinrichtung 50. Auch diese Fülleinrichtung 50 kann dabei in gleicherweise gestaltet sein wie die Vorrichtung 1, d. h. beispielsweise einen Antrieb 58 aufweisen, der ein Trägerrad dieser zweiten Behandlungseinheit 50 antreibt Ein Träger 54 dieser weiteren Behandlungseinheit kann dabei ebenfalls, wie der Träger 4 der Behandlungsvorrichtung 1 über ein Vier - Punkt - Momentenlager gelagert sein. In diesem Fall ist es auch möglich, auf eine zentrale Drehwelle zur Lagerung dieses Trägers zu verzichten. Anstelle eines Momentenlagers könnten jedoch auch andere Lager und insbesondere andere Wälzlager zum Einsatz kommen.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Vorrichtung
- 2: Behandlungseinheit
- 4: Träger
- 8: Antriebseinrichtung
- 12: Antriebsrad
- 12a: Außenverzahnung
- 14: Antriebsmotor/Elektromotor
- 16: Gestell
- 18: Abtriebsrad
- 22: Abtriebswelle
- 24: Ausnehmung
- 32: Halteplatte
- 34: Verschraubung
- 36: Schraubverbindungen
- 40: Vorrichtung
- 42: Transporteinrichtung
- 44: Transporteinrichtung
- 46: Übergaberad
- 48: Einlaufstern
- 50: Fülleinrichtung/Behandlungseinrichtung
- 54: Träger
- 58: Antrieb
- X: Drehachse
- E: Ebene des Trägers

## Patentansprüche

1. Vorrichtung (1) zum Behandeln von Behältnissen mit einem Träger (4), welcher drehbar ist und wobei eine Antriebseinrichtung (8) vorgesehen ist, welche ein drehfest mit dem Träger (4) ausgebildetes Antriebsrad (12) zum Drehen des Trägers (4) antreibt, und diese Antriebseinrichtung (8) einen Antriebsmotor (14) aufweist, wobei die Antriebseinrichtung (8) ein an einer Abtriebswelle des Antriebsmotors (14) angeordnetes Abtriebsrad (18) aufweist und dieses Abtriebsrad (18) direkt mit dem Antriebsrad (12) zum Drehen des Träger (4) zusammenwirkt und wobei
auf dem Träger (4) eine Vielzahl von Behandlungseinheiten (2) angeordnet ist, wobei jede dieser Behandlungseinheiten (2) eine Zuführeinrichtung aufweist, welche den Behältnissen ein fließfähiges Medium zuführt,
**dadurch gekennzeichnet, dass**
das Antriebsrad (12) direkt mit dem Träger (4) ausgebildet ist.

2. Vorrichtung nach Anspruch 1,
**dadurch gekennzeichnet, dass**
die Vorrichtung (1) ein ortsfestes Gestell (16) aufweist, dem gegenüber der Träger (4) drehbar gelagert ist.

3. Vorrichtung (1) nach Anspruch 2,
**dadurch gekennzeichnet, dass**
der Träger (4) gegenüber dem Gestell (16) über ein 4 - Punkt - Momentenlager drehbar gelagert ist.

4. Vorrichtung (1) nach wenigstens einem der vorangegangenen Ansprüche,
**dadurch gekennzeichnet, dass**
das Abtriebsrad (18) an einer Abtriebswelle (22) des Antriebsmotors (14) angeordnet ist und diese Abtriebswelle (22) sich senkrecht zu einer Ebene des Trägers (4) erstreckt.

5. Vorrichtung (1) nach wenigstens einem der vorangegangenen Ansprüche,
**dadurch gekennzeichnet, dass**
die Vorrichtung (1) eine Vorrichtung (1) zum Umformen von Kunststoffvorformlingen zu Kunststoffbehältnissen ist.

6. Vorrichtung (1) nach wenigstens einem der vorangegangenen Ansprüche,
**dadurch gekennzeichnet, dass**
die Vorrichtung (1) wenigstens eine ortsfest angeordnete Führungskurve aufweist, welche eine Bewegung wenigstens einer Behandlungseinheit (2) bewirkt.

7. Vorrichtung (1) nach wenigstens einem der vorangegangenen Ansprüche,
**dadurch gekennzeichnet, dass**
der Antriebsmotor vollständig unterhalb des Trägers angeordnet ist.

8. Vorrichtung (1) nach wenigstens einem der vorangegangenen Ansprüche 2 - 7, **dadurch gekennzeichnet, dass**
das Gestell eine Ausnehmung (24) zur Aufnahme des Antriebsmotors (14) aufweist.

9. Vorrichtung (1) nach wenigstens einem der vorangegangenen Ansprüche,
**dadurch gekennzeichnet, dass**
der Antriebsmotor (14) ein Elektromotor (14) ist, der sowohl zum Beschleunigen als auch zum Verzögern des Trägers (4) dient.

10. Vorrichtung (1) nach wenigstens einem der vorangegangenen Ansprüche,
**dadurch gekennzeichnet, dass**
die Vorrichtung Bremseinrichtungen (26) zum Abbremsen des Trägers (4) aufweist.

11. Vorrichtung (1) nach wenigstens einem der vorangegangenen Ansprüche,
**dadurch gekennzeichnet, dass**
das Antriebsrad (12) und das Abtriebsrad (18) Zahnräder sind.

12. Anlage zum Behandeln von Behältnissen mit einer Vorrichtung (1) nach wenigstens einem der vorangegangenen Ansprüche und mit einer weiteren Vorrichtung (50) zum Behandeln von Behältnissen, wobei diese weitere Vorrichtung (50) zum Behandeln von Behältnissen mit der Vorrichtung (1), insbesondere dauerhaft, synchronisiert ist.

13. Anlage nach Anspruch 12,
**dadurch gekennzeichnet, dass**
die Anlage eine erste um eine vorgegebene Drehachse angeordnete Transporteinrichtung (42) aufweist, welche der Vorrichtung (1) die Behältnisse zuführt, wobei diese Transporteinrichtung (42) ein Antriebselement zum Antreiben der Transporteinrichtung (42) aufweist.

14. Anlage nach Anspruch 12,
**dadurch gekennzeichnet, dass**
die Anlage eine zweite um eine vorgegebene Drehachse angeordnete Transporteinrichtung (44) aufweist, welche die Behältnisse von der Vorrichtung (1) abführt, wobei die zweite Transporteinrichtung (44) ein Antriebselement zum Antreiben der zweiten Transporteinrichtung aufweist.

## Claims

1. Apparatus (1) for treating containers, comprising a carrier (4) which is rotatable, and wherein a drive device (8) is provided which drives a drive wheel (12) for rotating the carrier (4), said drive wheel being fixed to the carrier (4), and this drive device (8) has a drive motor (14), wherein the drive device (8) has an output wheel (18) arranged on an output shaft of the drive motor (14) and this output wheel (18) cooperates directly with the drive wheel (12) for rotating the carrier (4), and wherein a plurality of treatment units (2) are arranged on the carrier (4), wherein each of these treatment units (2) has a feed device which feeds a flowable medium to the containers, **characterized in that** the drive wheel (12) is formed directly with the carrier (4).

2. Apparatus according to claim 1, **characterized in that** the apparatus (1) has a stationary frame (16), relative to which the carrier (4) is mounted to rotate.

3. Apparatus (1) according to claim 2, **characterized in that** the carrier (4) is mounted to rotate relative to the frame (16) via a 4-point slewing bearing.

4. Apparatus (1) according to at least one of the preceding claims, **characterized in that** the output wheel (18) is arranged on an output shaft (22) of the drive motor (14) and this output shaft (22) extends perpendicular to a plane of the carrier (4).

5. Apparatus (1) according to at least one of the preceding claims, **characterized in that** the apparatus (1) is an apparatus (1) for transforming plastics material preforms into plastics material containers.

6. Apparatus (1) according to at least one of the preceding claims, **characterized in that** the apparatus (1) has at least one guide cam which is arranged in a stationary manner and which brings about a movement of at least one treatment unit (2).

7. Apparatus (1) according to at least one of the preceding claims, **characterized in that** the drive motor is arranged entirely below the carrier.

8. Apparatus (1) according to at least one of the preceding claims 2 to 7, **characterized in that** the frame has a recess (24) for accommodating the drive motor (14).

9. Apparatus (1) according to at least one of the preceding claims, **characterized in that** the drive motor (14) is an electric motor (14) which serves both for accelerating and for decelerating the carrier (4).

10. Apparatus (1) according to at least one of the preceding claims, **characterized in that** the apparatus has brake devices (26) for braking the carrier (4).

11. Apparatus (1) according to at least one of the preceding claims, **characterized in that** the drive wheel (12) and the output wheel (18) are toothed wheels.

12. System for treating containers, comprising an apparatus (1) according to at least one of the preceding claims and comprising a further apparatus (50) for treating containers, wherein this further apparatus (5) for treating containers is synchronized, in particular permanently, with the apparatus (1).

13. System according to claim 12, **characterized in that** the system has a first transport device (42) which is arranged around a predefined axis of rotation and which feeds the containers to the apparatus (1), wherein this transport device (42) has a drive element for driving the transport device (42).

14. System according to claim 12, **characterized in that** the system has a second transport device (44) which is arranged around a predefined axis of rotation and which removes the containers from the apparatus (1), wherein the second transport device (44) has a drive element for driving the second transport device.

## Revendications

1. Dispositif (1) pour le traitement de récipients, avec un support (4) rotatif et où est prévu un dispositif d'entraînement (8) entraînant une roue d'entraînement (12) réalisée solidaire en rotation avec le support (4) pour la rotation du support (4), et où ledit dispositif d'entraînement (8) comprend un moteur d'entraînement (14), le dispositif d'entraînement (8) comprenant une roue menée (18) disposée sur un arbre de sortie du moteur d'entraînement (14) et ladite roue menée (18) coopérant directement avec la roue d'entraînement (12) pour la rotation du support (4), et où
une pluralité d'unités de traitement (2) est disposée sur le support (4), chacune desdites unités de traitement (2) comprenant un dispositif d'amenée qui conduit un fluide vers les récipients,
**caractérisé en ce que**
la roue d'entraînement (12) est formée d'un seul tenant avec le support (4).

2. Dispositif selon la revendication 1,
**caractérisé en ce que**
ledit dispositif (1) comprend un cadre fixe (16) monté de manière rotative par rapport au support (4).

3. Dispositif (1) selon la revendication 2,
**caractérisé en ce que**
le support (4) est monté de manière rotative par rapport au cadre (16) au moyen d'un palier à moment 4 points.

4. Dispositif (1) selon au moins une des revendications précédentes,
**caractérisé en ce que**
la roue menée (18) est disposée sur un arbre de sortie (22) du moteur d'entraînement (14) et **en ce que** ledit arbre de sortie (22) s'étend perpendiculairement à un plan du support (4).

5. Dispositif (1) selon au moins une des revendications précédentes,
**caractérisé en ce que**
ledit dispositif (1) est un dispositif (1) pour la transformation de préformes en matière plastique en récipients en matière plastique.

6. Dispositif (1) selon au moins une des revendications précédentes,
**caractérisé en ce que**
ledit dispositif (1) comprend au moins une came de guidage fixe, laquelle provoque un déplacement d'au moins une unité de traitement (2).

7. Dispositif (1) selon au moins une des revendications précédentes,
**caractérisé en ce que**
le moteur d'entraînement est entièrement disposé en dessous du support.

8. Dispositif (1) selon au moins une des revendications 2 à 7,
**caractérisé en ce que**
le cadre présente une cavité (24) pour le logement du moteur d'entraînement (14).

9. Dispositif (1) selon au moins une des revendications précédentes,
**caractérisé en ce que**
le moteur d'entraînement (14) est un moteur électrique (14) servant aussi bien à accélérer qu'à retarder le support (4).

10. Dispositif (1) selon au moins une des revendications précédentes,
**caractérisé en ce que**
ledit dispositif comprend des dispositifs de freinage (26) pour freiner le support (4).

11. Dispositif (1) selon au moins une des revendications précédentes,
**caractérisé en ce que**
la roue d'entraînement (12) et la roue menée (18) sont des roues dentées.

12. Installation pour le traitement de récipients avec un dispositif (1) selon au moins une des revendications précédentes et avec un autre dispositif (50) pour le traitement de récipients, ledit autre dispositif (50) pour le traitement de récipients étant synchronisé, en particulier de manière continue, avec le dispositif (1).

13. Installation selon la revendication 12,
**caractérisée en ce que**
ladite installation comprend un premier dispositif de transport (42) disposé autour d'un axe de rotation défini, lequel conduit les récipients vers le dispositif (1), ledit dispositif de transport (42) comprenant un élément d'entraînement pour entraîner le dispositif de transport (42).

14. Installation selon la revendication 12,
**caractérisée en ce que**
ladite installation comprend un deuxième dispositif de transport (44) disposé autour d'un axe de rotation défini, lequel évacue les récipients du dispositif (1), ledit deuxième dispositif de transport (44) comprenant un élément d'entraînement pour entraîner le deuxième dispositif de transport.
